Europäisches Patentamt

European Patent Office

Office européen des brevets

(11) Publication number: **0 577 030 A1**

# EUROPEAN PATENT APPLICATION

(21) Application number: **93110223.0**

(22) Date of filing: **26.06.93**

(51) Int. Cl.⁵: **G01C 19/66**

(30) Priority: **29.06.92 US 905719**

(43) Date of publication of application:
**05.01.94 Bulletin 94/01**

(84) Designated Contracting States:
**DE FR GB IT**

(71) Applicant: **HONEYWELL INC.**
**Honeywell Plaza**
**Minneapolis MN 55408(US)**

(72) Inventor: **Karpinski, Andrew J.**
**1715 Manchester Drive**
**Clearwater, FL 34616(US)**

(74) Representative: **Rentzsch, Heinz, Dipl.-Ing. et al**
**Honeywell Holding AG**
**Patent- und Lizenzabteilung**
**Kaiserleistrasse 39**
**Postfach 10 08 65**
**D-63008 Offenbach (DE)**

(54) **Multiple readout signal processing system for ring laser gyro.**

(57) An RLG signal processing system (50, 60) generates additional readout waveforms (OUTK, OUTL) having a predetermined phase relationship. The additional readout waveforms are in addition to present readout waveforms (OUT SINE B, OUT SINE A) and provide additional zero crossings to improve readout resolution. A resistive ladder (60) allows generation of additional readout waveforms by the addition of portions of present waveforms.

Fig.2

The present invention relates generally to an improvement in ring laser gyroscope signal processing systems, and more particularly to a signal processing system for improving readout resolution.

A ring laser gyroscope (RLG) comprises a pair of laser beams rotating in opposite directions about a closed loop optical path. Readout is accomplished with optical detectors and beam combining optics. The outputs from the clockwise (CW) and the counterclockwise (CCW) laser beams are combined so that they are nearly parallel. The wave fronts of these beams will interfere with each other, alternately cancelling and reinforcing, forming a fringe pattern. When the CW and CCW frequencies are different, due to the presence of an input rate, the fringe pattern or bars of light and dark will move in a direction determined by the rotation that is being sensed. By using two optical detectors to generate sinusoidal signals that are phase displaced 90°, the direction of rotation as well as the rate of rotation can be determined. The phase displaced signals are designated Sine A and Sine B.

In the past one readout circuit that has been employed uses each edge of both the Sine A and Sine B signals to generate a pulse for clocking a phase accumulator. This approach gives four clock pulses per full period of a readout waveform. For example, if one full period of a readout sine wave represents four arc seconds of rotation, each successive zero crossing of the two readout waves represents one arc second of rotation. When compared to using only one edge of either Sine A or Sine B, this approach gives a 4X improvement in readout resolution. Unfortunately, this resolution improvement is limited to a factor of four, since only four zero crossings are available from the two sine waves. Increased performance requirements in guidance systems have created a need a for ring laser gyroscope signal processing system which provides improved readout resolution.

## SUMMARY OF THE INVENTION

The present invention is characterized in claim 1 and solves these and other needs by providing a signal processing system for generating additional pairs of sinusoidal readout signals having a predetermined phase relationship to the Sine A and Sine B signals. The invention discloses a system and circuitry for generating multiple phase readout signals. The additional pairs of signals provide additional zero crossings and improved readout resolution. Preferred details and embodiments of the invention are described in the dependent claims. In one embodiment the invention includes a resistance ladder having first and second ends and a midpoint. Sine A is connected to the midpoint through a buffer amplifier, Sine B is connected to the first end through a buffer amplifier and Sine B is inverted and connected to the second end. A first additional readout signal is obtained at a connection between the midpoint and the first end, and a second additional readout signal is obtained at a connection between the midpoint and the second end. The connections are separated from the midpoint by equal resistance values.

## BRIEF DESCRIPTION OF THE DRAWINGS

FIG. 1 is a schematic drawing illustrating one embodiment of the present invention.
FIG. 2 is a schematic drawing illustrating the general principles of the present invention.

## DESCRIPTION OF THE PREFERRED EMBODIMENT

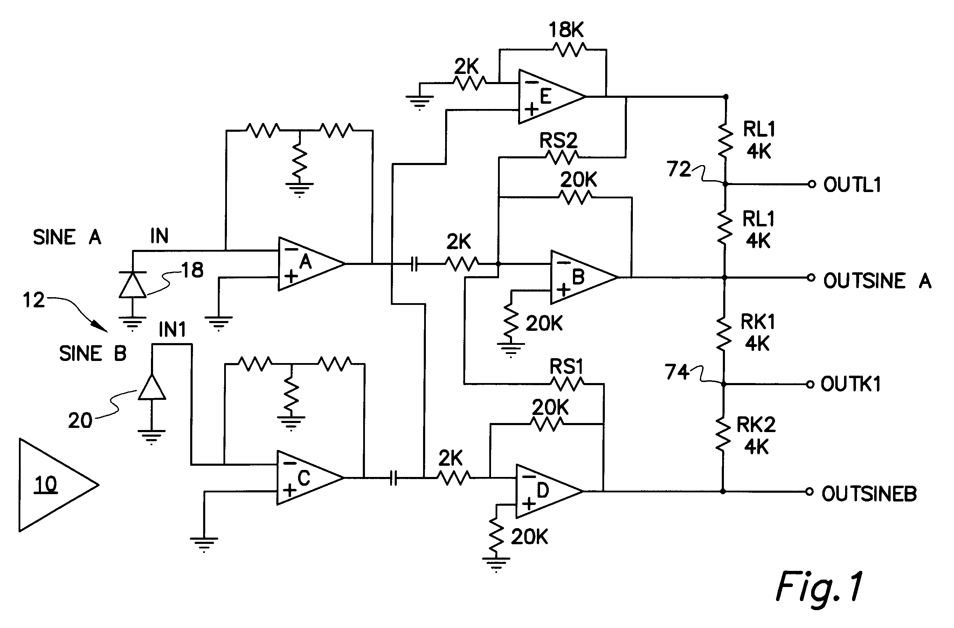

Referring now to FIG. 1, the general reference number 10 indicates a conventional solid block ring laser gyroscope in which two counter rotating laser beams propagate about a closed loop path formed by chambers and mirrors in the block. An optical detector 12 is located adjacent the beam path so that it "sees" the interference pattern of alternating relatively bright and dark regions formed by the counter rotating beams. The detector 12 may be of a suitable prior art design, and may include a pair of photodiodes 18 and 20.

The sinusoidal readout signals from the input rate readout detectors of an RLG are phased 90° apart ideally. U.S. Patent 5,094,537 assigned to the same assignee as the present application teaches an RLG signal processing system that can simply and economically correct quadrature errors between the RLG output signals. U.S. Patent 5,094,537 is hereby incorporated by reference.

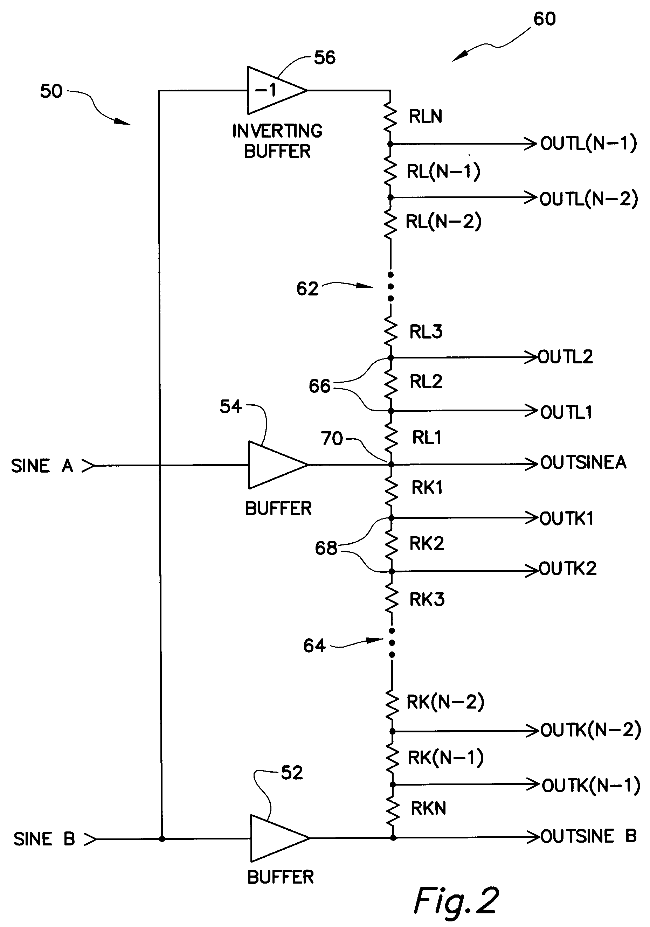

The present invention provides a means of theoretically infinite improvement in the gyroscope readout resolution. The principle of the present invention is illustrated in FIG. 2 where a multiple readout phase generator (MRPG) 50 is shown. The inputs to the MRPG 50 are Sine A and Sine B which are phased 90° apart and are prescaled to be of the same amplitude. Generator 50 also includes buffer 52, buffer 54, and inverting buffer 56. A resistor ladder 60 includes an upper section 62 and a lower section 64. Upper section 62 includes resistors RL1 through RLN and connections 66. Lower section 64 includes resistors RK1 through RKN and connections 68. Upper section 62 and lower section 64 are electrically connected at midpoint 70. Resistors RL1 through RLN and RK1 through RKN are all of equal value. The outputs of multiple readout phase generator 50 in accordance with the present invention are sine waves that are phase shifted with respect to the Sine A and Sine B inputs. Outputs from upper section 62 of resistor ladder 60 are designated OUTL1 through OUTL(N-1) and outputs from lower section 64 of resistor ladder 60 are designated OUTK1 through OUTK(N-1).

MRPG provides an additional sinusoidal readout signal from upper section 62 and a corresponding additional sinusoidal readout signal from lower section 64 to make up an additional pair of sinusoidal readout signals having a known phase relationship to Sine A and Sine B. Thus, if an additional signal were taken at OUTL2 in the upper section 62 the corresponding additional signal from lower section 64 would be taken at OUTK2. In this manner the resistance value from the readout signal connection in the upper section 62 to midpoint 70 would be equal to the resistance value from the readout signal connection in the lower section 64 to midpoint 70. The phase relationship of the outputs for Sine A leading Sine B by 90° would be as follows:

|  |  | N = 2 | N = 3 | N = 4 |
|---|---|---|---|---|
| OUTL(N-1)= | -(N-1) (90°/N) |  |  |  |
| OUTL(N-2)= | -(N-2) (90°/N) |  |  |  |
| . |  |  |  |  |
| . |  |  |  | -67.5° |
| OUTL2 = | -2 (90°/N) |  | -60° | -45° |
| OUTL1 = | -90°/N | -45° | -30° | -22.5° |
| OUTSINEA = | 0 | 0° | 0° | 0° |
| OUTK1 = | 90°/N | +45° | +30° | +22.5° |
| OUTK2 = | 2 (90°/N) |  | +60° | +45° |
| . |  |  |  | +67.5° |
| . |  |  |  |  |
| OUTK(N-2)= | (N-2) (90°/N) |  |  |  |
| OUTK(N-1)= | (N-1) (90°/N) |  |  |  |
| OUTSINEB = | 90° |  |  |  |

The phase relationship of the outputs for Sine B leading Sine A is the same as above except the polarity for the signs is reversed. Multiple readout phase generator 50 provides 4N zero crossings from 2N sine waves. The resulting sine wave outputs are then converted to square waves with comparators, and a pulse is generated for each transition of each of these square waves. The result is 4N pulses per readout sine wave period, or a 4N improvement in readout resolution, where N is the number of resistors in each of upper section 62 and lower section 64 of resistor ladder 60.

FIG. 1 also shows one embodiment of the present invention and includes a typical pair of prior art readout preamplifiers designated A, B, C and D. Diode 18 inputs Sine A through IN and diode 20 inputs Sine B through IN1. Operational amplifier E is also shown in FIG. 1 and its use is as described in U.S. Patent 5,094,537. Typical component values are shown on the drawings for illustrative purposes. The values of the two select resistors RS1 and RS2 are chosen to correct for any error from the ideal 90° phase difference between Sine A and Sine B as described in U.S. Patent 5,094,537. As seen in FIG. 1, resistors RL1, RL2, RK1 and RK2 sum the outputs of operational amplifiers E, B and D to provide additional sinusoidal readout waveforms at connections 72 and 74. The circuit in FIG. 1 provides the zero crossings necessary to provide an 8X improvement in readout resolution. The principles of the invention can be applied to implement any factor of four improvement in readout resolution such as 12X, 16X, 20X etc.

In accordance with the foregoing description, a signal processing system for improving readout resolution was developed that is easily incorporated into the design of ring laser gyroscopes. Although a specific embodiment of the invention is shown and described for processing the readout signals of a ring laser gyroscope, it will be apparent that the invention may also be used in connection with other rotation sensors and optical sensors delivering two sine-shaped or other signals having a particular phase shift between them.

## Claims

1. A readout signal processing system for a rotational sensor, in particular for a ring laser gyroscope, comprising:

   a) a pair of laser beams propagating in opposite directions about a closed loop path (10) producing an interference pattern of alternating relatively bright and dark regions; and

   b) means (A, B, C, D) for generating a first pair of sinusoidal readout signals in a quadrature relation in response to movement of said pattern, said sinusoidal readout signals having zero crossings for use in readout circuitry;

   **characterized by:**

   c) means (50, 60) for generating at least one additional pair of sinusoidal readout signals having a predetermined phase relationship to said first pair of sinusoidal readout signals wherein said at least one additional pair of sinusoidal readout signals provides additional zero crossings to the readout circuitry to provide improved readout resolution.

2. The system of claim 1, **characterized in that**

   a) said first pair of sinusoidal readout signals includes first and second sinusoidal readout signals;

   b) said additional pair of sinusoidal readout signals includes first and second additional sinusoidal readout signals; and

   c) said means (50, 60) for generating at least one additional pair of sinusoidal readout signals comprises:

   c1) a plurality of resistors (RK, RL) connected in series by a plurality of connection means to form a resistance ladder (60), said resistance ladder having a first end (at RKN), a second end (at RLN), and a mid-point (70);

   c2) means (54) for connecting said first sinusoidal readout signal (sine A) to said midpoint (70);

   c3) means (52) for connecting said second sinusoidal readout signal (sine B) to said first end:

   c4) means (56) for inverting said second sinusoidal readout signal;

   c5) means for connecting said inverted second sinusoidal readout signal to said second end;

   c6) means (68) for obtaining said first additional readout signal at a connection means located between said midpoint (70) and said first end and separated from said midpoint by a first resistance value; and

   c7) means (66) for obtaining said second additional readout signal at a connection means located between said midpoint (70) and said second end and separated from said midpoint by a second resistance value, with said first resistance value and said second resistance value being equal.

3. The system of claim 1 or 2, **characterized in that** said means (54) for connecting said first sinusoidal readout signal, said means (52) for connecting said second sinusoidal readout signal and said means (56) for inverting said second sinusoidal output includes operational amplifiers.

4. The system of claim 1, **characterized by:**

   a) a plurality of resistors (RK, RL) connected in series to form a resistive ladder (60) having a first end (at RKN), a second end (at RLN), and a midpoint (70);

   b) means (54) for connecting a first input signal (sine A) to said midpoint (70);

   c) means (52) for connecting a second input signal (sine B) to said first end (at RKN) of said resistive ladder (60); with said second signal being displaced in phase from said first signal by 90°;

   d) means (56) for connecting a third input signal to said second end (at RKN) of said resistive ladder (60), with said third input signal being equal to said second input signal inverted, said first, second and third input signals being of equal amplitude, and said first and second input signals being available as a first pair of output signals;

   e) means (66, 68) for obtaining additional pairs (OUTK1, OUTL1 to OUTK(N-1), OUTL(N-1)) of output signals from said resistive ladder with said additional pairs of output signals having a predetermined phase relationship with said first pair of output signals.

5. The system of claim 4, **characterized in that** said additional pairs of output signals each comprise a first additional output signal (OUTK) and a second additional output signal (OUTL), and said first additional output signals (OUTK) are obtained at a first point (68) in said resistive ladder (60) located between said midpoint (70) and said first end (at RKN) and separated from said midpoint by a first resistance value, and said second additional output signals (OUTL) are obtained at a second point (66) in said resistive ladder located between said midpoint (70) and said second end (at RLN) and separated by a second resistance value, with said first resistance value and said second resistance value being equal.

Fig.1

EP 0 577 030 A1

*Fig.2*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 012 286 (TELDIX GMBH) <br> * abstract; figures 3,6,7 * <br> --- | 1-5 | G01C19/66 |
| X | EP-A-0 239 946 (HONEYWELL INC.) <br> * abstract; figures 5,6,8,9 * <br> * column 6, line 51 - column 8, line 12 * <br> --- | 1 | |
| X | FR-A-2 532 436 (BRITISH AEROSPACE) <br> * abstract; figure 2 * <br> --- | 1 | |
| X | FR-A-2 532 418 (BRITISH AEROSPACE) <br> * abstract; figure 5 * <br> * page 15, line 19 - page 16, line 12 * <br> --- | 1 | |
| A | EP-A-0 332 412 (KEARFOTT GUIDANCE AND NAVIGATION CORP.) <br> * column 5, line 41 - column 6, line 18; figures 3,5 * <br> ----- | 1 | |

| TECHNICAL FIELDS SEARCHED (Int. Cl.5 ) |
|---|
| G01C |

The present search report has been drawn up for all claims

| Place of search | Date of completion of the search | Examiner |
|---|---|---|
| THE HAGUE | 14 SEPTEMBER 1993 | HUNT J.H. |

EPO FORM 1503 03.82 (P0401)